# EUROPEAN PATENT APPLICATION

(11) **EP 4 622 284 A1**
(43) Date of publication of application: **24.09.2025**
(21) Application number: 25190902.4
(22) Date of filing: 29.08.2022
(51) Int. Cl.: H04N 23/65, H04N 23/60

(54) **CAMERA OPERATING SYSTEM AND METHOD**

(30) Priority: 31.08.2021 US 202163239041 P
(62) Divisional of application: 22772738.5
(71) Applicant: Simplisafe, Inc., Boston, MA 02110 (US)
(72) Inventor: CARTER, Jason, Boston, 02108 (US); GRINDALL, Roy, Boston, 02108 (US); PLIMOUTH, Kensly, Boston, 02108 (US); ZHU, Mo, Boston, 02108 (US); SUBRAMANY, Rahul, Boston, 02108 (US)
(74) Representative: HGF

(57) **Abstract**

A camera includes an always on circuit including a motion or other sensor and/or communications module that are always provided with electrical power, and a sleep circuit including an imaging module configured to activate and provide power to components of the sleep circuit only intermittently and based on a signal from the always on circuit. The communications module can send a notification that the motion sensor has detected motion before or during a start up time period when the imaging module is not ready to capture image data. The communications module can receive a signal while components of the sleep circuit are in a low power mode indicating that a user has activated an application via which the user can request image data from the imaging module, and in response the imaging module can be activated to be in an operational state.

## Description

### RELATED APPLICATION

This Application claims priority under 35 U.S.C. § 119(e) to U.S. Provisional Application No. 63/239,041, entitled "CAMERA OPERATING SYSTEM AND METHOD," filed August 31, 2021, which is herein incorporated by reference in its entirety.

### TECHNICAL FIELD

This application relates to systems that include one or more cameras, such as security systems that include a camera.

### BACKGROUND

Cameras, including wireless cameras that can send video data without a wire or other physical connection, are known for use in a variety of different applications, such as with security systems. Such cameras can be used to record image data from areas of interest, such as near the front door of a house or other locations in and/or near a building or other monitored space. Some such cameras can be battery-powered, easing installation and increasing the range of locations that the cameras can be deployed.

### SUMMARY OF INVENTION

In some cases, cameras that are battery powered are shut down or otherwise put in a low power mode when not in use to save battery power. However, this can cause delays in receiving image data and/or other information from the camera because of a time delay while the camera is restarted after being in a low power mode. For example, if a user wishes to view an area imaged by a camera that is in a low power mode, the camera must first be powered up before the camera can image the area and send the related image data to the user. In some cases, the start up cycle including enabling the camera to capture and send image data may take 5 to 15 seconds or more. Thus, a user can be effectively prevented from immediately viewing the area because of the startup time delay. In other cases, a user or system component can be prevented from receiving prompt notifications from a camera regarding conditions sensed at the camera location. For example, some cameras are enabled with a motion sensor or other ability to detect conditions that prompt the camera to be activated from a low power mode to image an area. This can allow the camera to remain in low power mode until a sensed condition (such as motion) or other prompt suggests that the camera image the area. Once the condition is sensed, the camera can be restarted, and then image the area and send the image data. However, since communications systems of the camera are typically shut down in a low power mode, the camera cannot communicate even the fact that motion or other conditions were sensed, much less image data captured in response to the sensed condition, because the communication system must be restarted before the notification can be sent. These problems can be avoided by maintaining the camera systems, including communications, active at all times but this is typically not an option because the increased power consumption will drain battery power and increase the frequency at which batteries much be charged or replaced, or cause the camera to stop operating because of a dead battery.

In some aspects, a camera includes an electrical power supply and an always on circuit including a sensor configured to detect a condition near the camera and a communications module configured to send a notification in response to the sensor detecting the condition. For example, the always on circuit can include a motion detector configured to detect motion of objects near the camera and the communications module can be configured to send a notification in response to the motion detector detecting motion of an object. Components included in the always on circuit can have electrical power provided to the components from the electrical power supply at all times, e.g., these components of the always on circuit can be continuously active and ready to operate. A sleep circuit can include an imaging module configured to image an area near the camera, and components of the sleep circuit can have electrical power provided from the electrical power supply only intermittently and based on a signal provided from a component of the always on circuit. For example, the sleep circuit can be configured to have electrical power provided to the imaging module in response to the communications module sending the notification. In some embodiments, the sleep circuit can be configured to have electrical power provided to the imaging module in response to a signal indicating that the motion detector has detected motion near the camera. In some cases, the imaging module can be configured to be ready to capture image data at an end a startup period of time after the electrical power is provided to the imaging module, and the communications module can be configured to send the notification before the end of the startup period of time. For example, if the motion detector detects motion, the always on circuit can send a signal to the sleep circuit indicating that the imaging module should be activated. However, before the imaging module completes its startup, the notification can be send by the communications module, e.g., to a local base station.

**In** some embodiments, the electrical power supply includes a battery. The electrical power supply can be configured to receive electrical power from an electrical mains source, and the sleep circuit can be configured to have electrical power provided continuously to components of the sleep circuit when the electrical power supply receives electrical power from the electrical mains source. However, when power is not provided by a mains source, the sleep circuit can be configured to have electrical power provided from the battery to components of the sleep circuit only intermittently and based on the signal provided from the component of the always on circuit. **In** some embodiments, the electrical power supply can be configured to receive electrical power from an electrical mains source and is configured to charge the battery using the electrical power from the electrical mains source.

In some cases, the always on circuit includes an indicator light configured to illuminate to provide an indication that the motion sensor has detected motion. For example, if motion is detected, a light can illuminate an area near the camera to indicate that motion has been detected.

In some embodiments, the always on circuit can be configured to wirelessly communicate with a controller external to the camera, such as a base station of a monitoring system, using the communications module while the sleep circuit is in both a sleep mode and in an operational mode. The sleep circuit can include an activation circuit configured to turn on in response to an activation signal received from the always on circuit. Also, the activation circuit can be configured to place components of the sleep circuit from the sleep mode into the operational mode and can include its own communications module. The communications module of the sleep circuit (e.g., a first communications module), can require more power for operation than the communications module (e.g., a second communications module) of the always on circuit. In some cases, the first communications module has a higher bandwidth than the second communications module. In some embodiments, the first communications module is configured to communicate with an external server. In some cases, the second communications module comprises a sub-GHz communications module and the first communications module comprises a wifi communications module. In some embodiments, the controller includes a security system base station and the activation signal includes an instruction from the base station to operate the imaging module in the operational mode to capture image or video data. In some cases, the instruction can be in response to an input to the security system base station, such as a sensor signal or a user request from a server or an indication that the user has activated an application via which the user can request image data from the camera.

In some embodiments, the camera is configured to, in the operational mode, communicate with the controller using the second communications module in a back-up mode in response to a determination that the first communications module cannot properly communicate with a server. In the back-up mode, the camera device can send image or audio data to the controller using the second communications module.

In some embodiments, the activation signal is sent in response to the motion sensor detecting motion, and the activation circuit can be configured to put the imaging module in the operational mode to capture image data and to put the first communications module in the operational mode to send the image data to a remote device.

In some cases, the sleep circuit is configured to activate different sets of components of the sleep circuit to receive electrical power based on the signal from the component of the always on circuit. For example, the sleep circuit can be configured to activate a first set of components in response to a signal indicating that the motion sensor has detected motion and to activate a second set of components in response to a signal indicating that a user has activated an application via which the user can request image data from the camera.

In some embodiments, a camera includes an electrical power supply and an always on circuit including a sensor configured to detect a condition near the camera and a communications module configured to send a notification in response to the sensor detecting the condition. Components included in the always on circuit can have electrical power provided to the components from the electrical power supply at all times. A sleep circuit can include an imaging module configured to image an area near the camera, and components of the sleep circuit can have electrical power provided from the electrical power supply only intermittently and based on a signal provided from a component of the always on circuit.

In some embodiments, a camera includes an electrical power supply and an always on circuit including a communications module configured to communicate wirelessly with a controller remote from the camera. Components included in the always on circuit can have electrical power provided to the components from the electrical power supply at all times. A sleep circuit can include an imaging module configured to image an area near the camera, and components of the sleep circuit can have electrical power provided from the electrical power supply only intermittently and based on a signal received by the communications module that indicates that a user has activated an application via which the user can request image data from the imaging module.

Other advantages and novel features will become apparent from the following detailed description of various non-limiting embodiments when considered in conjunction with the accompanying figures and claims.

### BRIEF DESCRIPTION OF THE DRAWINGS

Aspects of the systems and methods described herein are described with reference to the following drawings in which numerals reference like elements, and wherein:
FIG. 1 is a schematic diagram of a monitoring system incorporating a camera;
FIG. 2 is a schematic block diagram of components of the FIG. 1 system illustrating selected features and modules of the components;
FIG. 3 is a schematic block diagram of selected components for a camera;
FIG. 4 shows steps of a method for controlling a camera in which a notification is sent while sleep circuit components are inactive and not provided with electrical power; and
FIG. 5 shows steps of a method for controlling a camera in response to a user activating an application via which image data can be requested from the camera.

### DETAILED DESCRIPTION

Aspects of the systems and methods described herein are described below by way of one or more illustrative embodiments. It should be understood that the illustrative embodiments described are not intended to limit the aspects, but rather to help show how one or more aspects can be implemented in particular examples. Also, aspects can be implemented alone and/or in combination with other aspects. For example, some aspects below relate to a camera that can employ an always on circuit and a sleep circuit with components that are intermittently provided with power based on a signal from the always on circuit. In some cases, the always on circuit can be configured to send a notification, e.g., indicating detected motion or other condition that caused the camera to restart or power components of the sleep circuit. In some cases, components of the sleep circuit can be restarted or otherwise provided with power in response to an indication that a user may wish to view an area imaged by the camera. **In** yet other cases, components of the sleep circuit can be restarted or otherwise provided with power in response to conditions sensed by one or more sensors that are remote from the camera, e.g., that are part of a security system and located in areas of a monitored location remote from the camera. These aspects and others can be employed together, individually and/or in any suitable subcombination with each other, e.g., a camera can be configured to employ one, some or all of these features. To the extent features are not mutually exclusive, they can be combined together in a single embodiment.

**In** some embodiments, a camera can be configured to be secured to a surface such as a wall, door jamb or casing, window, or other surface so that an imaging device of the camera can capture image data of an area near the camera. The camera can include one or more components to provide various functions in addition to capturing image data regarding an area in a field of view of the camera. For example, the camera can have one or more sensors that can sense a condition, such as motion, and cause the camera to perform one or more functions, such as send a notification that motion or other condition has been sensed, activate an audible and/or visual chime, activate a camera and/or microphone to record data, illuminate a light to assist a visitor in seeing areas around the camera, etc. In some embodiments the camera can include components, such as a camera or other imaging device to image an area near the camera, a motion sensor to detect motion near the camera, a speaker for producing audible sound, a microphone for receiving and transmitting a signal indicative of sound at or around the camera, wireless and/or wired communications devices for sending and receiving signals regarding sensed conditions (including image data) at the camera, a controller to generate control signals for the camera or other devices, a user interface to receive and present information to a user (e.g., visually and/or audibly), a battery or other power source, and so on. Thus, the camera can perform various functions, such as illuminating an area near the camera, allowing a visitor to announce their presence at a building door or other access area, allowing a user to communicate audibly and/or visually with a visitor via a camera/display/speaker/microphone, allowing a user to monitor activity in an area near the camera (via recorded sound and/or video), and so on.

In some aspects, a location monitoring system such as a home security system includes a camera arranged to capture image data and to send the image data to a remote server, which can perform a security monitoring function to identify alarm states, notify authorities of an alarm condition at a monitored location and/or allow a user to interact with the camera and other sensors or components at the monitored location. For example, a user can interact with the remote server using a smartphone application or other user interface to view image data provided by the camera, control the camera to start or stop image recording, send or receive audio communications (e.g., to allow the user to talk with a person at the monitored location), etc. The systems and methods described herein include different techniques for communicating with external devices, which as described below can each be utilized in a variety of ways to increase camera performance in several ways, including increased battery life, increased reliability, or more efficient (e.g., less expensive) data transfer methods, such as when operating over cellular device networks. To do so, the camera can have two different communications modules, each having different characteristics and capabilities, such as a high bandwidth module and a low bandwidth module. In some cases, the high bandwidth module may require two-way communications between devices to operate, whereas the low bandwidth module can operate properly using only one-way communication.

For example, the camera can have a first communications module, such as a wifi communications module, arranged to send the video image data to the remote server via a first communications network connection. The first communications network connection can include a wifi connection from the camera to a router or gateway local to the camera, and a broadband/Internet connection from the router or gateway to the remote server. Thus, the first communications network connection can have a first minimum bandwidth that is relatively high, providing a relatively high speed connection between the camera and the server. This can allow the camera to send live or streaming video data to the server, which can then be sent to a user, without significant time delay or disruption to the video quality. The first communications network can allow the camera to send the video data to the remote server directly, meaning without routing the image data through a base station or other monitoring system components local to the monitored location. This can free a base station or other local controller at the monitored location for other tasks, such as monitoring sensor data, detecting the presence of alarm conditions, and so on.

The camera can also have a second communications module arranged to communicate via a second communications network connection with monitoring system components that are local to the camera, such as a base station, other cameras and/or remote sensors. The second communications network can be a low power system, e.g., that allows the camera to shut down the first communications module during a sleep mode but continuously operate its second communications module without significantly draining battery power. This can allow the camera to send notifications and receive information using the second communications module without delay because the second communications module need not be started up from a sleep mode. As a result, the camera can immediately send notifications regarding conditions sensed at the camera (such as detected motion), as well as receive and react to instructions send to the camera via the second communications network. As an example, the camera can use the second communications module to communicate with a local base station that controls operation of the local system components and communicates with a remote server, e.g., to send notifications regarding alarm conditions at the monitored location, to allow a user to receive data from system sensors or other components, to allow a user to adjust system operation, and so on. Thus, the camera can promptly send notifications to the base station via the second communications network, e.g., regarding sensed conditions, thereby allowing the base station to take prompt action, such as causing other cameras in the monitoring system to be taken out of a sleep state to record image data, notifying a monitoring server and/or user that motion or other condition has been sensed at the camera, etc. Moreover, the camera can send the notification and action can be taken by the base station and other monitoring system components even before the imaging device of the camera has completed its startup from sleep mode and is ready to record image data. In addition, the base station can relay information to the camera via the second communications network to cause the camera to take action. For example, the base station can receive instructions from a remote server that a user has activated an application that can be used to access image data from the camera. In response, the base station can send an instruction to the camera (and other devices in the monitoring system) via the second communications network to bring the imaging device, first communication module and other components out of sleep mode and into an operational mode to be ready to record and send image data. The base station can be arranged to communicate with the remote server via the first communications network, e.g., a wifi connection to a local router/gateway and broadband/Internet connection, as well as a third communications network, such as a cellular network. Normally, the base station can employ the first communications network (or a network that operates similar to the first communications network (e.g., another wifi network or a wired ethernet connection)) to communicate with the server, e.g., because of the relatively fast data transfer provided, but can switch to use of the third communications network when there are problems with the first communications network. Note that communication between the base station and the server using the first communications network is not routed through the camera, but rather is direct between the base station and the server.

Normally, the camera can send image data to the remote server using the first communications network. However, if a communications link between the camera and the remote server using the first communications network to send image data is inoperable, e.g., when an Internet connection between the camera and remote server operates so as to send data below a threshold rate or fails entirely to send data (such as due to a failed or otherwise not sufficiently operable (e.g., too low bandwidth) wifi connection), the camera and base station can operate together to send at least a portion of the video image or audio data to the server. This can allow, for example, a user to get at least some image data, e.g., one or more still image frames selected from the video image data and/or at least some audio information that is part of the video image data, even when the first network connection between the camera and the remote server is not operating suitably. (As used herein, video image data refers to data that includes image data only, or data that includes image data and audio data.) When this occurs, a communications link between the camera and the base station can be established and at least a portion of the video image data sent from the camera to the base station. The base station can then relay the data to the remote server, e.g., using the third communications network.

The communications link between the camera and the base station can be established in different ways. For example, if the camera detects a poor or failed connection to the server, the camera can request the base station to act as a wifi access point so the camera can send video data to the base station via a wifi connection. Alternately, the base station can receive a signal from the remote server, user or other device indicating that the connection between the camera and remote server is not operating suitably and that the base station should operate as a wifi access point. As another alternative, the camera and base station can establish a communications link using a different communications protocol and/or devices than wifi, such as a low power consumption (and low bandwidth) communications protocol, such as a sub-GHz communications protocol, and can do so at the initiation of the camera, server or other component of the monitoring system.

As discussed more below, in addition to addressing loss of wifi (or other first communications networks), the camera can include the sub-GHz communications or other low power communications module that operates during a low power mode of the camera when all or most other components of the camera are disabled. The sub-GHz communications module can operate to receive a wake up signal and cause the camera to operate to capture and send video image data directly to the remote server via the first network connection. Sending and/or receipt of the wake-up signal can be triggered in various ways, such as based on information from a sensor at the monitored location (e.g., a motion sensor remote from the camera detects motion near the camera), based on a user requesting video from the camera, based on a user taking an action that at least may indicate the user may want to view image data from the camera (such as by the user opening a smartphone application by which the user can access the image data), based on a detected alarm condition, or other conditions. As detailed below, by operating the camera in such a manner when a certain set of components (e.g., relatively higher power consumption components, such as the imaging device, high power communications module, flash lights, certain sensors) are not necessarily always on, significant power usage savings can be achieved. In some cases, the low power communications (e.g., sub-GHz communications link) and a select few other components (e.g., a motion detector (e.g., a non-imager based detector (e.g., an infrared sensor))) can be "always on," so that the camera remains in communications with the base station, but in a significantly reduced power state and, upon notification over the low power link or from an internal sensor, selected components of the camera, such as the imaging device and internal image processing equipment, can be quickly turned on for use. Not necessarily all components of the "always on" circuit will be continuously active even though electrical power is provided to the components at all times so that the components can be active whenever necessary. For example, a sub-GHz communications module may not necessarily be always active in detecting potential communications signals, but rather operate in a so-called sniff mode in which the communications module wakes one or more times per second to listen for transmissions. If none are detected, the module will reenter a low power or inactive mode; if transmissions are detected the module will remain active to receive and handle the message. As a result, the camera can typically consume less power than other systems that may rely solely on one such connection (wifi or other high bandwidth protocol) for interacting with other related devices.

In some cases, the sub-GHz communications module or other low power communications module can be used to send a notification to the base station, remote server and/or user regarding a sensed condition at the camera. As noted above, the camera can have an "always on" circuit that includes a low power communications module and motion sensor or other component to sense conditions at the camera. The camera can be configured so that when the motion sensor or other component detects a condition (such as one that will cause the imaging device or other components of the sleep circuit to be powered), the low power communications module can send a notification of the detected condition, e.g., to a base station, remote server and/or user. Since the low power communications module is always powered and ready to communicate, the notification can be sent promptly, e.g., immediately upon the condition being detected. This can enable the base station, remote server and/or user to quickly receive the notification, thereby allowing prompt action to be taken in response. For example, the base station or remote server could cause other cameras or location monitoring system components to be activated based on the notification and/or a user can promptly learn that a condition has been sensed and request access to image data from the camera so the user can view the area around the camera. After the notification is sent, the camera can start components of the sleep circuit, such as a high power communications module and imaging device so that an area can be imaged and the image data sent by the high power communications module to the base station, remote server and/or user. In some cases, the camera can send a confirmation or follow up message regarding the notification, e.g., to confirm that motion was detected and/or that motion of a particular type of object such as a person was detected. As an example, the camera can be configured to perform image analysis on image data captured by the imaging device to determine whether a person or other object is moving in the area and send a message regarding the results of the image analysis. This can help the base station, remote server, user, etc. confirm whether suitable action should be taken or not, e.g., to notify authorities, review image data from the camera, activate additional cameras and/or other sensors, etc.

In some cases, the sub-GHz communications module or other low power communications module can also be used to send video image data from the camera to the base station, such as when the first network connection between the camera and server is inoperable. Image data received by the base station from the camera can be sent to the remote server using any suitable network connection, such as a connection including a cellular network, an Internet connection, a wifi connection, etc. This alternate network connection between the base station and the camera can have a maximum bandwidth that is smaller, in some cases significantly smaller, than the bandwidth of the connection between the camera and camera using the first communications network. Thus, live video may not be enabled between the camera and the server (and/or between the camera and a user in communication with the server), but one or more still images can be relayed by the base station to the server. In some embodiments, the one or more still images can be selected by image analysis of video data captured by the camera. For example, the camera can include an image analysis module that analyzes the image data to select an image frame that includes a recognizable, or recognized, human face, pet or other animal, sound, etc., and the selected image frame can be sent to the base station, and then to the server. As a result of providing smaller image or audio data, the resulting size of information sent over a cellular connection can also be reduced, which can decrease cellular data consumption and cost.

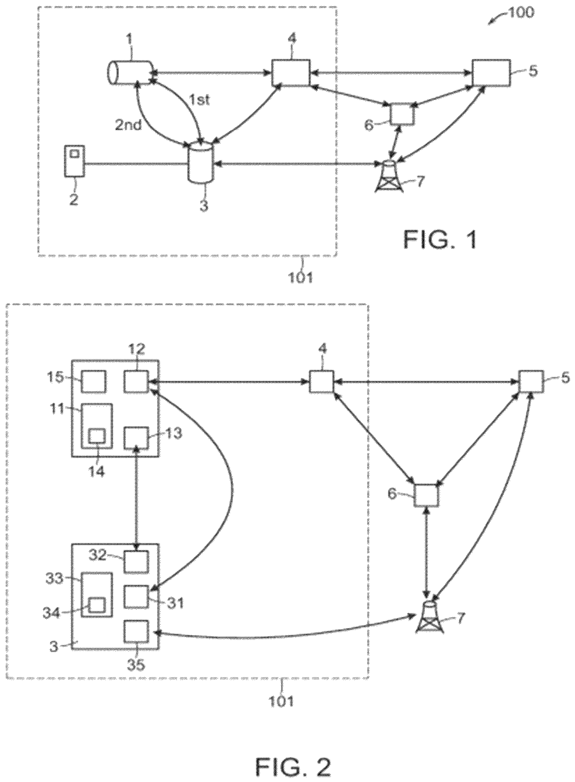

FIG. 1 shows a schematic diagram of an example location monitoring system 100. The system 100 is arranged to monitor a location 101, which can be an apartment, a room in a larger building, a building, an outdoor space (such as a playground), etc. Monitoring of the location 101 can involve any variety of different functions, such as detecting and analyzing conditions, such as use of doors to enter/exit a building, opening/closing of windows, noise at the location, fire and/or smoke conditions, movement of people or objects, abnormally high/low temperatures and/or water, etc. (As used herein, a condition "at" a location such as a building refers to the condition being within and/or near the location, e.g., movement of persons "at" a building refers to movement of persons within and/or near the building.) In some embodiments, the monitoring system 100 is a security system for a home or apartment and can monitor for the presence of people, sounds, door/window opening, etc., as well as perform functions of identifying whether an alarm condition is present, and taking particular actions in response to sensed conditions, such as notifying authorities (e.g., police, fire, building management, etc.) of particular conditions, notifying a user of particular conditions, displaying an alarm (e.g., emitting siren noises and emergency lighting at the building, etc.), recording video and/or audio conditions at the building, and so on. Thus, although the monitoring system can be referred to herein as an "alarm" system, the alarm system need not necessarily display alarm sounds or lights at the location, but instead can be employed only for monitoring conditions at the location and optionally reporting on monitored conditions.

Multiple monitoring system 100 components can be local to the location 101, i.e., physically positioned at the location 101, whereas other components can be positioned remote from the location 101. Generally, components of the system 100 can include any suitable programmable computer or other data processing devices along with suitable instructions (e.g., stored in one or more memories) and any other suitable components to perform the functions described herein. In this embodiment, components that are at the location 101 include a camera 1, one or more other sensors 2, and a base station 3 or local controller, which can all be part of a security system installed at the location 101. A wifi access point, router and/or other gateway 4 to an Internet or other wide area network connection (such as a broadband modem) can have one or more components at the location 101 (such as a wifi router) and/or one or more remote components (such as a satellite-based wifi component). The gateway 4 provides a network connection for the camera 1 and the base station 3 to the Internet or other wide area network, and so can provide a communications link to remote components of the system 100. Remote components can include a server 5, which can include multiple servers in distributed locations and/or other data processing and storage devices. The server 5 can provide various monitoring functions such as receiving data from the camera 1, sensors 2 and/or base station 3, controlling operation of the local components at the location 101 (including the base station 3), analyzing data from the base station 3 and other local components to assess whether an alarm condition is present or to assess other location conditions, notifying authorities (such as police or fire) regarding conditions at the location 101 which may need attention, etc. The server 5 can also provide information regarding the location 101 to, and receive instructions from, a user device 6 (often referred to herein more simply as a user, and can include a smartphone, computer, or other data processing device along with a suitable user interface to provide output (e.g., information display) and receive input (e.g., user commands)). In addition to being able to communicate with the server 5 via a network connection that includes the gateway 4, the base station 3 can communicate with the server 5 via a network that includes a cellular network 7. The cellular network 7 can be employed, for example, when the gateway-based network is not operable.

The camera 1 can communicate directly with the server 5 via a first network that includes a wifi connection with the gateway 4 and an Internet or other wide area network connection between the gateway 4 and the server 5. Thus, the camera 1 can record and send video image data directly to the server 5 without routing the image data through the base station 3 or other components between the camera 1 and the gateway 4. The camera 1 can also communicate with the base station 3 in at least two ways: 1) via a wifi connection between the camera 1 and the base station 3 when the base station 3 acts as a wifi access point, and 2) a sub-GHz communication network or link between the camera 1 and the base station 3. (The camera 1 can also be capable of communicating with the base station 3 using the wifi network in which the gateway 4 or other device in communication with the gateway 4 (e.g., a wifi router) acts as the wifi access point for both the camera 1 and the base station 3.) As discussed in more detail below, the sub-GHz communication link can be employed when the camera 1 is in a low power mode to conserve battery power in which all or most other components of the camera 1 are disabled other than the sub-GHz communication module and other components necessary to support the sub-GHz communication module. Since the sub-GHz communication module can operate on very low power requirements, the camera 1 and the base station 3 can communicate when the camera is nearly entirely deactivated in low power mode, e.g., to send a notification from the camera 1 to the base station 3 that motion or other condition has been sensed at the camera or to cause the camera 1 to activate an imaging device to record image data of an area of interest and send that data directly to the server 5. For example, in response to a user starting or otherwise access a smartphone application or other software module via which the user can access or request image data from the camera 1, the base station 3 can send instructions to the camera 1 via the sub-GHz communication network to startup the camera imaging device and other components as needed to be ready for capturing image data. In this way, the camera 1 can be fully activated and ready to send image data via the high power communications module if the user requests the image data, thereby avoiding or reducing any startup delay. In addition, the camera 1 can contact the base station 3 while the camera 1 is in the low power mode, e.g., to send a notification that a motion detector or other sensor that is powered during the low power mode has detected a condition at the camera. The notification can indicate that the condition sensed at the camera 1 has or will prompt the camera 1 to power or startup components of a sleep circuit that are shut down during the low power mode, such as the imaging device and wifi communications module. The notification could be received by other cameras 1 at the location 101, and could be used to cause the cameras 1 to activate sleep circuit components as necessary. Similarly, a condition sensed by one or more sensors 2 that are remote from the camera 1 can cause the sensor 2 to send a notification to one or more cameras 1 that are remote from the sensor 2. Such a notification, which could represent sensed motion at the sensor 2, could prompt the cameras 1 to activate sleep circuit components, such as an imaging device, as necessary. Thus, a camera 1 and remote sensor 2 can communicate directly regarding sensed conditions at the camera 1 or sensor 2, which can cause the camera 1 or sensor 2 to take particular action, such as activating sleep circuit components, without the involvement of the base station 3. Moreover, if the location 101 has multiple cameras 1, all of the cameras 1 can be activated to record image data in response to a single signal sent from the base station 3 and/or sensor 2 on the sub-GHz protocol. This is because the sub-GHz activation signal need not necessarily be acknowledged by every camera 1 to cause activation of the camera 1.

Similar to the camera 1, the base station 3 can communicate directly with the server 5 via the first network that includes a wifi connection with the gateway 4 and an Internet connection between the gateway 4 and the server 5. This can allow the base station 3, for example, to report conditions detected by the sensors 2 to the server 5, as well as other information such as an alarm condition determined at the location 101 by the base station 3. Where the network connection between the base station 3 and the server 5 via the first network is not operable (e.g., completely failed or transmitting at a data rate below a threshold), the base station 3 can communicate with the server 5 via another network that includes a cellular network 7. As will be understood, this other network that includes the cellular network 7 can include portions of the Internet network and other wired or non-cellular networks. This network that includes the cellular network can have a relatively small maximum bandwidth as compared to the first network, e.g., data can be transmitted at rates that are significantly lower than using the first network. In some embodiments, the network that includes the cellular network can have a maximum bandwidth that is smaller than a minimum bandwidth of the first network connection between the camera 1 and the server 5 (or between the base station 3 and the server 5). The user 6 can communicate with various components of the system 100, including the server 5 and the base station 3, using multiple different network connections including the cellular network 7, the Internet, networks including the gateway 4 (such as a wifi network at the location 101) and others.

FIG. 2 shows a schematic block diagram of selected components from the FIG. 1 system. In some embodiments, the camera 1 includes a controller 11, a first communications module 12 (e.g., a wifi communications module), a second communications module 13 (e.g., a sub-GHz communications module), an imaging module 15 and an image processing module 14. In some embodiments, the base station 3 includes a controller 33 having an image processing module 34, a first communications module 31 (e.g., a wifi communications module), a second communications module 32 (e.g., a sub-GHz communications module), and a third communications module 35 (e.g., a cellular communications module). It should be understood that the components of the camera 1 and base station 3 shown in FIG. 2 are selected for purposes of explanation and that the camera 1 and/or base station 3 can include one or more other components for performing any suitable function. As an example, the controllers 11, 33 can include a data processing device for implementing software or other computer-implemented instructions, various sensors, indicators or other user interface components, a battery or other power supplies, voltage converters, storage devices, and other elements to perform various functions. In some embodiments, the camera 1 can include a passive infrared sensor, ultrasonic sensor or other device that can detect movement and/or the presence of various objects and a signal from such a sensor can be used by the controller 11 to activate the imaging module 15 to detect image data from an area of interest, such as a field of view of the imaging module 15. Such image data can be analyzed, compressed or otherwise processed by the image processing module 14 and related information stored in a memory of the controller 11, e.g., for sending to the server 5 at a current or future time. The imaging module 15 can include any suitable components for capturing image data, such as lenses, filters, a CMOS or other imaging device, a microphone to capture sound data that is combined with image data to form video image data, etc. as is known in the art. The image processing module 14, 34 can include one or more software components, artificial intelligence features, or other instructions that are implemented by the controller 11, 33 to perform image analysis (such as facial recognition, movement detection, object recognition, etc.) or other processing functions (such as generating MPEG, JPEG or other image data structures, and so on).

The first communications module 12 can include a wifi communications module having one or more antennas, transceivers, a related microcontroller unit, etc. as needed to provide communications in a wifi protocol network. The second communications module 13 can include a sub-GHz communications module having suitable components for communicating in a sub-GHz protocol network or link, such as one or more antennas, related microcontroller, signal encoders/decoders, and so on. The first communications module 12 can have significantly higher power requirements than the second communications module 13, and so where the camera 1 is powered only by battery power, the controller 11 can disable the first communications module 12 as well as other camera components during periods when the camera 1 is not actively capturing, processing, sending or otherwise handling video image data. During such low power periods, only the second communications module 13 can be active, along with other components required for operation of the second communications module 13 and possibly other low power components used by the camera 1 to trigger camera operation, such as a passive infrared sensor that is used to trigger activation of the imaging module 15 to capture image data when the camera 1 is in a low power mode. Thus, during low power periods, the camera 1 can be caused to activate the imaging module 15 in different ways. In some embodiments, a sensor at the camera 1 such as a passive infrared sensor, can be used to trigger imaging module startup and image capture. In some embodiments, the second communications module 13 (e.g., a sub-GHz communications module) can receive an activation signal from the base station 3 and/or a sensor 2 of the system 100 to cause activation of the imaging module 15 and image capture. Upon receipt of the activation signal by the second communications module 13, the controller 11 can activate the imaging module 15 and other components as needed. Sensors 2 of the system 100 can send an activation signal to the second communications module 13 of the camera 1 based on various criteria, such as detection of movement in an area of interest, detection of a door or window opening, or other conditions at the location 101. The base station 3 can send the activation signal based on various criteria, such as information received from one or more sensors 2 (opening of a door, etc.), or receipt of an activation signal by the base station 3 from the server 5 and/or user 6. An activation signal from a server 5/user 6 can be prompted for various reasons, such as a user wishes to view an area of interest (e.g., by the user sending a specific request for image data and/or by opening or activating a smartphone application via which image data can be requested), some condition detected by the server 5 at the location 101 requires activation of the camera 1 (such as inoperability of a network connection between the camera 1 and the server 5) and others.

In addition, or alternately, the camera 1 can be configured to send a notification in response to sensed motion or other condition while in the low power mode. For example, if a passive infrared sensor of the camera 1 senses motion, the second communications module 13 can send a notification, e.g., to the base station 3, sensors 2 and/or any other components capable of receiving the notification signal, that indicates that the condition has been sensed. As noted above, the camera 1 can also (e.g., simultaneous with, before or after sending the notification) activate the imaging module 15 and/or other components of a sleep circuit that are deactivated in the low power mode, e.g., so the components can perform or be ready to perform particular functions. In some cases, the notification is sent before the imaging module 15 has completed its startup and is ready to capture image data. For example, after a notification regarding a sensed condition is sent by the second communications module 13, the imaging module 15 can be activated and then capture image data that is analyzed by the image processing module 14. Processing by the image processing module 14 can involve verifying that motion was actually detected and/or the type of motion or moving object that was detected. Based on the analysis of the image processing module 14, a follow up message can be sent, whether by the first or second communications module 12, 13, to confirm that motion or other condition was detected and/or other characteristics of the detected condition, such as the type of motion or moving object detected, an identity of the object (e.g., a person can be identified via the image analysis and the person's identity send in the follow up message), or other.

The camera 1 can be arranged such that when the imaging module 15 is activated to capture image data, the camera 1 also activates the first communications module 12 to send the image data directly to the server 5, i.e., without routing the image data through the base station 3 or other monitoring system components at the location 101. This can enable faster transmission to the server 5, e.g., allowing a user 6 to view real-time video at the location 101, while freeing the base station 3 from handling any image data flows to the server 5. As a result, the base station 3 can be more available for its critical functions, such as detecting alarm events and notifying the server 5 of them. Where the first network connection between the camera 1 and the server 5 is inoperable, there may still be a need for at least some video image data to be transmitted to the server 5. For example, there can be an alarm condition at the location 101, such as a detected broken window or forced door opening during a failure of the first network connection, and transmission of at least one image frame (or still image) from video image data captured by the camera 1 can be useful to determine whether a person is involved with the alarm event and if so, the identity of the person. In some cases, the base station 3 may have a secret alert function where if one or more conditions at the location 101 are detected (e.g., movement around a house at a camera 1 that causes the camera 1 to send a notification via the low power communications module), the base station 3 can activate one or more cameras 1 to record and send video image data without notifying authorities or otherwise triggering an alarm state. This may allow a user to be notified of the activity at the location 101 without triggering an alarm state and attendant siren noise, notifying authorities, etc. As another alternative, each time a user 6 activates an application, the application may automatically send a request to the base station 3 (whether directly or through the server 5) to activate the camera 1. The base station 3 can then send an activation signal to the camera 1 via the second communications module 13, and if the camera 1 is in a low power state, the camera 1 can start the imaging module 15 and other components, e.g., so the camera is ready to send image data if requested. In addition, or alternately, the camera 1 can send at least a portion of the image data captured by the activated imaging module 15 to the base station 3 (e.g., a still image), and the base station 3 can relay at least a portion of the image data to the server 5, such as by a network connection that includes the cellular network 7. (The base station 3 could use a network connection that includes the gateway 4 if, for example, the network connection between the camera 1 and the gateway 4 is disrupted, such as by interference rather than employing the cellular network 7.) This can enable the server 5 to respond rapidly, e.g., in real time, if the user requests image data from the camera 1. As an example, if the user requests video data from the camera 1, the server 5 will be able to respond with image data (e.g., streaming video) that was captured shortly after the user activated the application, and possibly from before a time that the user actually requested the image data because the imaging module 15 was started up in response to activation of the user application and began capturing image data before the user request was made.

Image data can be sent from the camera 1 to the base station in different ways. For example, the camera 1 can detect that a connection to the server 5 is inoperable and send a request via the first communications module 12 or the second communications module 13 that the base station 3 operate as a wifi access point. A wifi network connection can then be established between the first communication module 12 of the camera 1 and the base station 3 (e.g., via a wifi communications module 31 in the base station 3), and image data sent from the camera 1 to the base station 3. Alternately, the camera 1 can send image data to the base station 3 using the second communications module 13 (e.g., the sub-GHz communications module). In this case, a sub-GHz communications module 32 or other module at the base station 3 that operates according to the protocol used by the second communications module 13 of the camera 1 can establish a suitable communications network or link with the camera 1 to receive the image data. Note as well that while the camera 1 can initiate the establishment of a network connection or link between the camera 1 and base station 3 when a network between the camera 1 and server 5 is inoperable, the base station 3 can do so as well, either at its own prompting or in response to receipt of a suitable signal from the server 5 or user 6. For example, the server 5 can detect a failure of a communications network connection with the camera 1 and send a signal to the base station 3 indicating the failure of the connection and requesting the first communications module 31 of the base station 3 act as a wifi access point or that the base station 3 otherwise establish a communications link with the camera 1 to receive image data from the camera 1. Once image data is received by the base station 3, the base station 3 can send the image data, or a portion of it, to the server 5 via any suitable network connection, such as by using a cellular network module 35 and a network connection that includes the cellular network 7.

As noted above, either a communications link between the camera 1 and the base station 3 for sending image data, or a network connection between the base station 3 and the server 5 can have a relatively small maximum bandwidth or other ability to send large amounts of data in a rapid fashion. In such case, a portion of the video image data can be selected for sending from the camera 1 to the base station 3 and/or from the base station 3 to the server 5. In some embodiments, the camera 1 can select a portion of the video image data for sending to the base station 3 based on analysis of the image data. As an example, the image processing module 14 can identify one or more image frames that include a recognizable or recognized face, and send that selected image frame to the base station 3. Image frame(s) can be selected in other ways, such as by identifying frames that have a person, animal, pet, object, text, or some other feature that would make the image useful. In some embodiments, audio data that is part of the video image data can be used to select one or more image frames, such as a set of images corresponding to a time during which glass breakage is detected, or when a person is heard talking. Thus, the camera 1 can be able to send useful video image data to the base station 3 even when sending the information via a relatively low bandwidth connection, such as on a sub-GHz and/or cellular network connection. In other embodiments, the base station 3 can select one or more image frames from video data received from the camera 1, e.g., using the image processing module 34, whether the camera 1 has sent a full set of image frames or sent a selected set of images to the base station. The image processing module 34 of the base station 3 can use image analysis or any other suitable technique to identify portions of video image data for sending to the server 5.

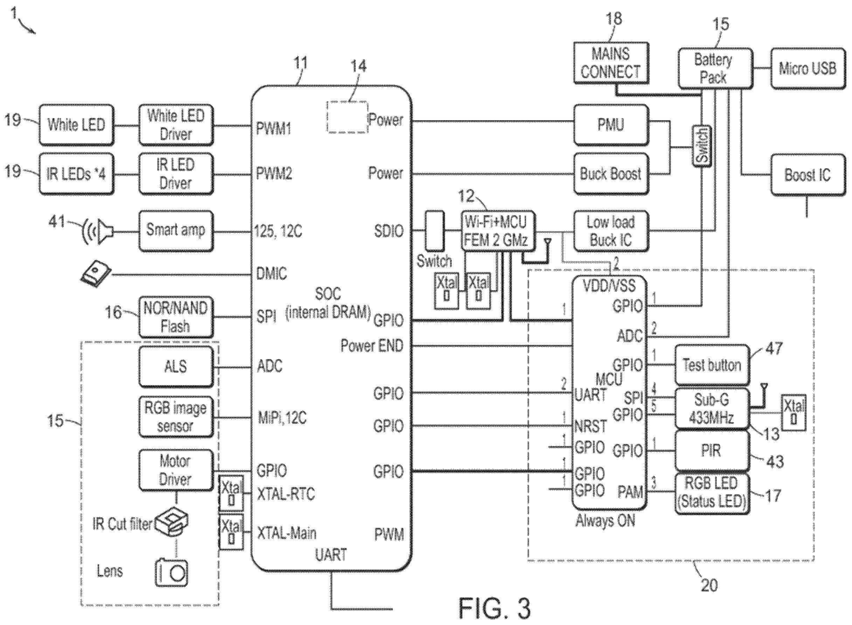

FIG. 3 shows a schematic block diagram of selected components for an example camera 1. In some embodiments, the controller 11 can include a system on a chip (SOC) data processor or computing device that implements software and other instructions, e.g., stored in a memory 16 or elsewhere, to perform various control and other functions, including functions of an image processing module 14. The controller 11 can also include various user interface components 17 such as status LEDs or other indicators, buttons, switches or other user input devices, a speaker or microphone to output or receive input regarding audible sound, and so on. The controller 11 in some embodiments can include a battery 15 or other power supply, a power management unit (PMU) for adjusting voltage, current and/or other aspects of power provided to various components of the camera 1, and any other suitable components for performing input/output, control or other functions. In some cases, the controller 11 can include a mains connector 18 configured to connect to a mains power supply to provide electrical power to the camera 1. The mains power supply can provide electrical power to the camera 1 in any suitable way, such as at standard household voltage and frequency (e.g., 100V to 250V and 50-60Hz) or other configurations (such as 24V AC, 5-12V DC, etc.). In some embodiments, the imaging module (or camera) 15 can include an image sensor, one or more filters (such as an IR cut filter shown in FIG. 3), optical lens, a motor or other drive to control lens focusing or other operations, a light sensor or other exposure control system (ALS), and other components. As an example, the imaging module 15 can include infrared and/or visible light LEDs or other light emitters 19 that can help illuminate an area for imaging purposes, such as illumination light, ranging or other distance determination, focusing operations, and so on. In some cases, light emitters 19 can be used to illuminate an area near the camera 1 without imaging taking place, e.g., the camera 1 can operate as a spotlight.

As described above, the camera 1 can have some components that are always active or powered with electrical energy, and other components that are deactivated or not powered when not needed. In some embodiments, the camera 1 can include an always on circuit 20 that includes components that are always activated and/or provided with electrical power, even during low power modes of the camera 1. For example, when the camera 1 is powered by the battery 15, one or more components of the camera 1 can be put into a sleep or low power mode to reduce power consumption while components of the always on circuit 20 are continuously provided with power. As noted above, components of the always on circuit 20, although always provided with electrical power, need not necessarily be continuously active. Instead, components such as a communications module can operate intermittently, e.g., be active one or more times per second for a brief period, but otherwise remain inactive unless receiving or transmitting a message. Other portions of the camera 1 (e.g., part of the sleep circuit and/or an activation circuit implemented by the processor) can be in a sleep or low power mode and can be activated or turned on to put one or more components of the camera in an operational mode, e.g., when the always on circuit 20 receives or otherwise provides an activation signal. In some embodiments, the controller 11 can include a microcontroller unit (MCU) that is part of the always on circuit 20 and is capable of performing a limited number of functions needed to control, act on and/or receive input from components of the always on circuit 20, as well as cause other portions of the controller 11 to be activated when necessary to exit the low power or sleep mode. In some embodiments, the always on circuit 20 can include a sub-GHz communications module 13 or other low power communications module that is active to receive communications from a device external to the camera 1, such as the base station of a security system, e.g., to cause activation of the camera 1 to record image data using the imaging module 15. In some cases, a passive infrared sensor (PIR) or other motion sensor 43 can be included with the always on circuit 20 to detect motion or other conditions to cause the camera 1 to activate the imaging module 15 or other parts of the sleep circuit. As an example, the PIR sensor 43 can detect the presence of people or motion in a field of view of the camera 1 and provide a suitable signal to the MCU to cause the controller 11 to activate the imaging module 15 and capture video image data. In some embodiments, the always on circuit 20 can include a camera switch 47 which can be actuated by a user, e.g., by pressing on a button or other portion of the camera 1 to cause the camera 1 to send a notification to a base station. While in some embodiments the camera switch 47 can include a mechanical switch that is actuated by motion, other arrangements for the switch 47 are possible, such as capacitive and other switches that do not necessarily require physical motion to actuate the switch 47. The always on circuit 20 can also include a status or other indicator light 17, e.g., to illuminate an area around a button or press area where a user can actuate the camera switch 47. This can allow the camera 1 to always provide a visual indication to a user where the camera 1 is located, e.g., in low ambient light conditions, even when other components of the sleep circuit are in low power mode.

In some embodiments, while the camera 1 is in a low power mode and all components except for the always on circuit 20 are deactivated, the always on circuit 20 can detect motion or other indication that some or all components of the sleep circuit should be activated and/or that a notification of the detected condition should be sent (such as by the sub-GHz module 13). For example, in response to the PIR sensor 43 or camera switch 47, the always on circuit 20 can cause the controller 11 to activate the imaging module 15 to record video image data and a wifi or other high power communications module 12 to establish a network with an external device to send the image data to a remote server or other device. Alternately, the always on circuit 20 can detect an indication that the camera or other component of the sleep circuit should be activated by receiving a signal via the sub-GHz communications module 13, which can cause activation of the imaging module 15, wifi module 12 and/or other components. Such a signal can be sent by a base station of a security system, whether in response to a condition sensed by a sensor, a signal sent by a sensor remote from the camera 1, a signal sent by a remote server, or a request from a user to activate the camera 1 for some reason. As an example, when a security system base station (e.g., in response to data from a sensor) detects that there is a person or other detected condition at a location near the camera 1, the base station can send a notification to a user. In response, the user can click the notification, which causes the user to send a request to the base station for an image of the area where the person or other condition was detected. This can cause the base station to communicate with the camera 1 via the sub-GHz communication link to activate the camera, capture an image and send the image to the base station (e.g., via the wifi module with the base station acting as an access point) for forwarding to the user (e.g., via a cellular network). Alternately, the camera 1 can send the image directly to a server which can relay the image to the user. In some cases, the camera 1 can perform image analysis on the video image data and select an appropriate image (e.g., one including a visible face) for sending to the user.

Other portions of the always on circuit 20 can cause one or more components of the sleep circuit (e.g., including any or all components not included in the always on circuit 20) to be activated, e.g., by causing an activation signal to be sent. For example, actuation of the camera switch 47 can cause an activation signal to be provided to the sleep circuit (e.g., from the MCU of the always on circuit 20 to the processor) to actuate one or more components that is in a low power or sleep mode. In response, the processor can provide suitable signals or other control to activate one or more components in response to the activation signal. Also, different components of the always on circuit 20 can cause the activation of different components or sets of components of the sleep circuit. For example, detected motion by the motion sensor 43 can cause the imaging module 15 and first communication module 12 to be put into an operational mode from a sleep mode, whereas actuation of the camera switch 47 can cause a microphone, speaker and/or light (e.g., to illuminate an area around the camera 1 to assist a visitor in seeing) to be activated into an operational mode from a sleep mode. Thus, different activation signals from the always on circuit 20 can cause different sets of components of the sleep circuit to be activated. Also, the always on circuit 20 can receive information from devices external to the always on circuit 20 to cause activation of one or more components of the sleep circuit. For example, the always on circuit 20 can receive a signal via the sub-GHz communication module 13 (or other communication device) from an external device such as a base station, a remote sensor or other portion of a security system, a remote server, etc. that the imaging module 15 or other component of the sleep circuit should be activated, e.g., to record image data of an area near the camera 1. As an example, if a user opens or otherwise activates an application via which the user can access or request image data from the camera 1, a signal can be sent to the camera 1 via the sub-GHz communication module 13 that the imaging module 15 and/or other portions of the sleep circuit should be activated in case the user requests image data. Activation of the application can be detected by a server 5, which in response can relay a message to the base station 3 to send the activation message to the camera 1. The always on circuit 20 can relay the activation signal to the processor or other part of the sleep circuit to cause the suitable activation of components of the sleep circuit. The always on circuit 20 can keep the communication module 13 or other communication components always active and/or powered to receive and send signals from external devices, including when the sleep circuit is in a sleep or low power mode. For example, the sub-GHz communications module 13 can operate for several microseconds one or more times per second to listen for transmissions. If none are detected, the module 13 may go into a sleep or low power mode for a few hundred microseconds (e.g., 400ms), after which time the module 13 will again wake to listen for transmissions. If a transmission is detected during an active cycle, the module 13 will remain active to receive and handle the transmission. Signals sent to the module 13 are suitably configured so that if the module 13 becomes active during the signal transmission, the module 13 can recover the complete message. Such operation is well known to those of skill in the art.

In some embodiments, the sleep circuit can be configured to have electrical power provided continuously to one or more components of the sleep circuit when the electrical power supply receives electrical power from the mains connector 18, and have electrical power provided from the battery 15 to components of the sleep circuit only intermittently and based on an activation signal provided from the always on circuit 20. That is, when electrical power is received via the mains connector 18, there may be little concern for minimizing power consumption and thus components can be kept in an operational state at all times or whenever desired. During this time, power from the mains connector 18 can be used to charge the battery 15 or other storage device, as needed. While all components of the sleep circuit can be continuously activated and provided with power when mains power is supplied, only selected components can be made active and receiving power while others are put in a sleep mode and activated and provided with power based on an activation signal from the always on circuit. As an example, components which are slow to start may be kept active and powered while other fast start components can be put in a sleep mode. If power from the mains connector 18 is interrupted (or never present), power can be provided from the battery 15 to the always on circuit 20 and components of the sleep circuit put in sleep or low power mode unless an activation signal is provided from the always on circuit 20. This can conserve power usage while enabling the camera 1 to provide its functions as needed for an extended period, e.g., providing video data upon arrival of a visitor at the camera 1, etc.

As discussed more below, the camera can include the sub-GHz communications or other low power communications module that operates during a low power mode of the camera when other components of the camera are disabled. The sub-GHz communications module can operate to receive a wake up signal and cause the camera to operate to capture and send video image data directly to a remote server. Sending and/or receipt of the wake-up signal can be triggered in various ways, such as based on information from a sensor at a monitored location (e.g., a motion sensor detects motion near the camera), based on a user requesting video from the camera and/or activating an application via which image data can be requested from the camera, based on a detected alarm condition, or other conditions. By operating the camera in such a manner when a certain set of components (e.g., relatively higher power consumption components, such as the imager, flashlights, certain sensors) are not necessarily always on, significant power usage savings can be achieved. In some cases, the low power (sub-GHz communications link) and a select few other components (e.g., a motion detector (e.g., a non-imager based detector (e.g., an infrared sensor))) can be "always on," but in a significantly reduced power state and, upon notification over the low power link or from an internal sensor, the rest of the camera, such as the imager and internal image processing equipment, can be quickly turned on for use. As a result, the camera can typically consume less power than other systems that may rely solely on one such connection (wifi or other high bandwidth protocol) for interacting with other related devices.

In some cases, the sub-GHz communications module or other low power communications module can also be used to send video image data from the camera to other external devices such as a base station of a security system. Image data received by the base station or other external device can be sent to a remote server using any suitable network connection, such as a connection including a cellular network, an Internet connection, a wifi connection, etc. This alternate network connection between the base station and the server can have a maximum bandwidth that is smaller, in some cases significantly smaller, than the bandwidth of a connection between the camera and server using another communications network, such as wifi. Thus, live video may not be enabled between the camera and the server (and/or between the camera and a user in communication with the server), but one or more still images can be relayed by the base station to the server. In some embodiments, the one or more still images can be selected by image analysis of video data captured by the camera. For example, the camera can include an image analysis module that analyzes the image data to select an image frame that includes a recognizable, or recognized, human face, pet or other animal, sound, etc., and the selected image frame can be sent to the base station, and then to the server. As a result of providing smaller image or audio data, the resulting size of information sent over a cellular connection can also be reduced, which can decrease cellular data consumption and cost.

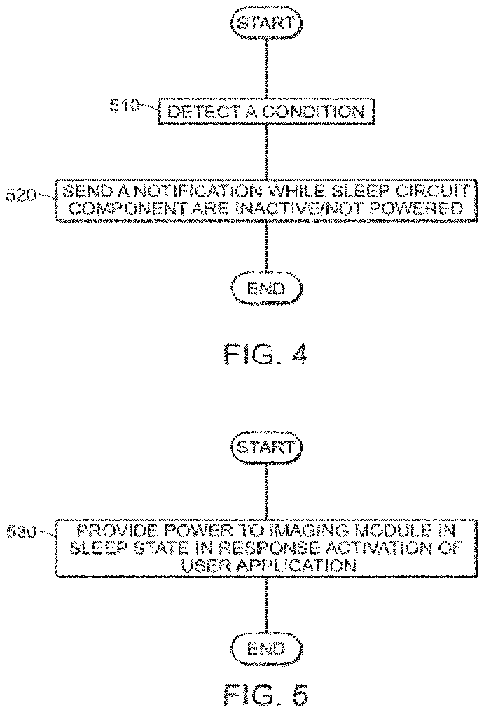

FIG. 4 shows steps in a method for controlling a camera in which a notification is sent in response to a detected condition. For example, in step S10, a condition at the camera is detected using a sensor that is part of the camera. The sensor could be a motion detector that detects motion near the camera, or other suitable sensors that detect other conditions. In step S20, a notification is sent from the camera to a remote device such as a base station in response to the sensor detecting the condition. The notification can be sent while components of a sleep circuit of the camera including an imaging module are inactive and not provided with electrical power. For example, the notification can be sent from a communications module that is part of an always on circuit as described above.

In some embodiments, electrical power is provided to the imaging module and/or other components of a sleep circuit only intermittently and based on a signal provided from a component of an always on circuit of the camera which is provided with electrical power at all times. For example, the signal can be provided in response to detecting a condition, such as motion detected by a sensor of the camera, motion or other conditions detected by sensors remote from the camera, and/or in response to a user has activating an application via which the user can request image data from the imaging module. In some cases, electrical power can be provided to the imaging module in response to sending the notification. In some embodiments, the notification can be sent by a sub-GHz communication module which is a component of an always on circuit of the camera which is provided with electrical power at all times. In some cases, electrical power can be provided to components of an always on circuit of the camera at all times, with the always on circuit including a sensor to detect the condition and a communications module to send the notification.

FIG. 5 shows a step of a method for controlling a camera in response to activation of a user application. In step S30, electrical power is provided to an imaging module of the camera that is in an inactive state in response to a user activating an application via which the user can request image data from the imaging module. Thus, the imaging module can be caused to startup prior to any request for image data from the user via the application. In this way, the imaging module can be ready, or closer to ready, when such a request is made. In some cases, electrical power is provided to the imaging module only intermittently and based on a signal provided from a component of an always on circuit of the camera which is provided with electrical power at all times. For example, a communications module that is part of the always on circuit can receive a message indicating activation of the user application. In response, the always on circuit can send the signal indicating that the imaging module should be provided with electrical power. In addition, such a signal can be sent in response to other conditions, such as in response to detecting a condition with a sensor of the camera, and/or in response to a condition sensed by a sensor remote from the camera, and/or in response to sending a notification that a condition such as motion has been sensed at the camera. The notification can be sent by a sub-GHz communication module which is a component of an always on circuit of the camera which is provided with electrical power at all times.

In some embodiments, a location monitoring system includes a camera that is located outdoors and is configured to generate monitoring data at a location using an image sensor and capable of collecting and analyzing the data. The monitoring system may also include a base station configured to communicate with the outdoor camera, the user of the system, and/or a monitoring server which may monitor the location in the absence of or in addition to the user. The base station may be configured in an armed mode, e.g., during which the base station can enter an alarm state based on various sensor conditions such as opening of a door while the door is locked, a home mode in which the base station will enter an alarm state based on different sensed conditions (such as if an exterior locked door is opened, but not if an interior door is opened), and a disarmed mode during which the base station will enter an alarm state in response to yet further different sensed conditions than the armed mode or home mode (such as entering an alarm state in response to detected water in a basement, but not in response to an interior or exterior door opening). When the base station is in an armed (or disarmed) mode, the outdoor camera can monitor an outdoor area, detect motion in the area, and in response capture image and/or audio data and analyze the data according to various criteria. In some embodiments, the criteria and/or actions taken by the camera based on the analysis can depend on whether the alarm system is in an armed or disarmed mode. In some embodiments, the camera can identify whether detected motion is that of a human, e.g., if the alarm system is in an armed mode the camera may attempt to identify whether detected motion is that of a human, whereas if the alarm system is in a disarmed mode the camera may not analyze detected motion at all. If the detected motion is caused by a human, the camera and/or base station can send an alert to a user and/or a monitoring server as well as begin recording video data of the detected human and/or displaying a countdown chime or siren that is audible in the area around the detected human. A user can be given a threshold period of time to respond to the alert, such as by dismissing or canceling the alert, disarming the alarm system via user app and/or keypad at the property, requesting video data from the camera regarding the human, requesting to communicate via audio/video with the person, etc. Where the user can communicate with people at the property, the camera or other portions of the alarm system can have a video and/or audio display to facilitate communication. If the user fails to respond within the threshold, the monitoring server may prompt monitoring personnel to review the video data, attempt to communicate with the human at the property, and/or notify authorities such as the police. In some cases, if the camera detects a human, the camera can analyze the video data of the human in an attempt to recognize the human, e.g., by facial or voice recognition, etc., or the camera can take steps to recognize the human in other ways that do not involve video data analysis, such as by detecting that an authorized person's phone or other device is located within a particular distance of the property (e.g., using geofencing). If the human is recognized as a homeowner or other person authorized to be at the property, the camera can prompt the alarm system to use an extended time for the threshold period of time to allow a user to respond to an alert. This may provide the recognized homeowner with extended time to enter the building and disarm the alarm. Alternately, if the person is not recognized as authorized to be at the property, the shorter threshold period of time may be employed before an alert is sent.

In some embodiments, an outdoor camera can be integrated into an alarm system including indoor sensors, e.g., to detect window and door opening, glass breakage, etc. and other components. Operation of the outdoor camera and indoor sensors and other alarm system components can be coordinated, e.g., by the alarm system base station, so that indoor and/or outdoor sensors operate based on conditions sensed at outdoor and/or indoor locations. For example, if the outdoor camera detects human motion near a back door of the building, the base station can employ indoor sensors at the rear of the building to monitor for unauthorized entry and/or to follow the movements of the human into and through the building. In addition, or alternately, the base station can use an alarm siren to display a noise or audible message to the human at the back door to vacate the premises or otherwise discourage the human from entering the building. As another example, if indoor sensors detect unauthorized opening of a door of the building, the base station can cause the outdoor camera to record video data, e.g., to hopefully capture a person exiting the building through the door. Thus, indoor and outdoor sensors can capture evidence, perform data analysis, etc. in response to alarm conditions detected at any location in or around a building.

In some embodiments, events detected by an outdoor camera can be assigned a risk score based on various criteria and events can be screened or identified for screening by monitoring personnel or a user based on the risk score. For example, the presence of a human detected by an outdoor camera at night may be assigned a higher risk score than the presence of a human during the day. Similarly, a human acting suspiciously regardless of the time of day such as hiding behind bushes or walking around a property multiple times in a few days can be assigned a higher risk score than arrival of a known delivery person carrying and leaving a package at the building five days a week. In some cases, higher risk scores can be assigned to events that tend to have a higher correlation to criminal activity than other events. Some criteria that can be factored into risk score assignment can include time of day an event is detected, crime statistics in the area local to the outdoor camera, recognition of a human that is authorized or not to be at the premises, how long an unknown person is detected to be at the premises, whether the event is known or predicted in advance of detection (e.g., a package delivery may be known to be occurring between 4-6pm and receive a lower risk score than an unexpected delivery), whether a human is detected by multiple outdoor cameras and/or on multiple consecutive days or weeks, whether a human is detected by the outdoor camera along with other sensor data indicative of an alarm event (such as breaking glass), etc. An outdoor camera can be configured to assign risk scores to detected events, e.g., using artificial intelligence and/or other data analysis techniques, and can forward or otherwise recommend events along with related video data for screening by monitoring personnel and/or a user along with or based on an associated risk score. Alternately, or in addition, risk scores can be assigned by an alarm base station, monitoring server, a user, or other device or person. Risk scores can be used to rank or otherwise determine an order in which events are screened by monitoring personnel and/or a user, e.g., such that higher risk score events are reviewed by a person before lower risk score events even if the higher risk score events were detected later in time. As an example, a user interface dashboard used by monitoring personnel to screen event data can display higher risk event data in a foreground or otherwise more prominently than lower risk score event data. Risk scores can be used for other purposes, such as whether police and/or other authorities are notified automatically by a computer system, e.g., an event with a risk score over a threshold can cause notification of police before human screening, whether video data or other sensor data is stored and for how long, adjusting a countdown or delay time that a base station employs before entering an alarm state, whether a countdown chime or siren is displayed when a human is detected and before a user responds to a corresponding alert and/or an alarm system is disarmed, and so on.

While systems and methods have been described with reference to various illustrative embodiments, such systems and methods are not limited to the embodiments described. Thus, it is evident that many alternatives, modifications, and variations of the embodiments described will be apparent to those skilled in the art. Accordingly, embodiments as set forth herein are intended to be illustrative, not limiting.

Further examples and features of the present disclosure are set out below in the following numbered clauses:
1. A camera including:
   an electrical power supply;
   an always on circuit including a motion detector configured to detect motion of objects near the camera and a communications module configured to send a notification in response to the motion detector detecting motion of an object, components included in the always on circuit having electrical power provided to the components from the electrical power supply at all times; and
   a sleep circuit including an imaging module configured to image an area near the camera, components of the sleep circuit having electrical power provided from the electrical power supply only intermittently and based on a signal provided from a component of the always on circuit.
2. The camera of clause 1, wherein the sleep circuit is configured to have electrical power provided to the imaging module in response to the communications module sending the notification.
3. The camera of clause 1, wherein the sleep circuit is configured to have electrical power provided to the imaging module in response to a signal indicating that the motion detector has detected motion near the camera.
4. The camera of clause 3, wherein the imaging module is configured to be ready to capture image data at an end a startup period of time after the electrical power is provided to the imaging module, and wherein the communications module is configured to send the notification before the end of the startup period of time.
5. The camera of clause 1, wherein the electrical power supply includes a battery.
6. The camera of clause 5, wherein the electrical power supply is configured to receive electrical power from an electrical mains source, and the sleep circuit is configured to have electrical power provided continuously to components of the sleep circuit when the electrical power supply receives electrical power from the electrical mains source, and is configured to have electrical power provided from the battery to components of the sleep circuit only intermittently and based on the signal provided from the component of the always on circuit.
7. The camera of clause 5, wherein the electrical power supply is configured to receive electrical power from an electrical mains source and is configured to charge the battery using the electrical power from the electrical mains source.
8. The camera of clause 1, wherein the always on circuit includes an indicator light configured to illuminate to provide an indication that the motion sensor has detected motion.
9. The camera of clause 1, wherein the always on circuit is configured to wirelessly communicate with a controller external to the camera using the communications module while the sleep circuit is in both a sleep mode and in an operational mode, the communications module being a second communications module; and
   the sleep circuit includes an activation circuit configured to turn on in response to an activation signal received from the always on circuit, the activation circuit configured to place components of the sleep circuit from the sleep mode into the operational mode, the sleep circuit further comprising a first communications module.
10. The camera of clause 9, wherein the first communications module has a higher bandwidth than the second communications module.
11. The camera of clause 9, wherein the first communications module is configured to communicate with an external server.
12. The camera of clause 9, wherein the second communications module requires less power for operation than the first communications module.
13. The camera of clause 9, wherein the sleep circuit comprises a microphone.
14. The camera of clause 9, wherein the second communications module comprises a sub-GHz communications module and the first communications module comprises a wifi communications module.
15. The camera of clause 9, wherein the controller comprises a security system base station and the activation signal comprises an instruction from the base station to operate the imaging module in the operational mode to capture image or video data.
16. The camera of clause 15, wherein the instruction is in response to an input to the security system base station.
17. The camera of clause 16, wherein the input comprises a sensor signal or a user request from a server or an indication that the user has activated an application via which the user can request image data from the camera.
18. The camera of clause 9, wherein the camera is configured to, in the operational mode, communicate with the controller using the second communications module in a back-up mode in response to a determination that the first communications module cannot properly communicate with a server.
19. The camera of clause 18, wherein, in the back-up mode, the camera device sends image or audio data to the controller using the second communications module.
20. The camera of clause 9, wherein the activation signal is sent in response to the motion sensor detecting motion, and the activation circuit is configured to put the imaging module in the operational mode to capture image data and to put the first communications module in the operational mode to send the image data to a remote device.
21. The camera of clause 1, wherein the sleep circuit is configured to activate different sets of components of the sleep circuit to receive electrical power based on the signal from the component of the always on circuit.
22. The camera of clause 21, wherein the sleep circuit is configured to activate a first set of components in response to a signal indicating that the motion sensor has detected motion and to activate a second set of components in response to a signal indicating that a user has activated an application via which the user can request image data from the camera, the first and second sets of components being different from each other.
23. A camera including:
   an electrical power supply;
   an always on circuit including a sensor configured to detect a condition near the camera and a communications module configured to send a notification in response to the sensor detecting the condition, components included in the always on circuit having electrical power provided to the components from the electrical power supply at all times; and
   a sleep circuit including an imaging module configured to image an area near the camera, components of the sleep circuit having electrical power provided from the electrical power supply only intermittently and based on a signal provided from a component of the always on circuit.
24. A method for operating a camera, including:
   detecting a condition at the camera using a sensor that is part of the camera; and
   sending a notification from the camera to a remote device in response to the sensor detecting the condition, sending of the notification occurring while components of a sleep circuit of the camera including an imaging module are inactive and not provided with electrical power.
25. The method of clause 24, further comprising providing electrical power to the imaging module only intermittently and based on a signal provided from a component of an always on circuit of the camera which is provided with electrical power at all times.
26. The method of clause 25, wherein the signal is provided in response to detecting the condition.
27. The method of clause 25, wherein the signal is provided in response to a condition sensed by a sensor remote from the camera.
28. The method of clause 25, wherein the signal is provided in response to a user has activated an application via which the user can request image data from the imaging module.
29. The method of clause 24, further comprising providing electrical power to the imaging module in response to sending the notification.
30. The method of clause 24, wherein the step of detecting the condition includes detecting motion near the camera.
31. The method of clause 24, wherein the notification is sent by a sub-GHz communication module which is a component of an always on circuit of the camera which is provided with electrical power at all times.
32. The method of clause 24, further comprising providing electrical power to components of an always on circuit of the camera at all times, the always on circuit including a sensor to detect the condition and a communications module to send the notification.
33. A camera including:
   an electrical power supply;
   an always on circuit including a communications module configured to communicate wirelessly with a controller remote from the camera, components included in the always on circuit having electrical power provided to the components from the electrical power supply at all times; and
   a sleep circuit including an imaging module configured to image an area near the camera, components of the sleep circuit having electrical power provided from the electrical power supply only intermittently and based on a signal received by the communications module that indicates that a user has activated an application via which the user can request image data from the imaging module.
34. A method for operating a camera, including:
   providing electrical power to an imaging module of the camera that is in an inactive state in response to a user activating an application via which the user can request image data from the imaging module.
35. The method of clause 34, wherein the step of providing includes providing electrical power to the imaging module only intermittently and based on a signal provided from a component of an always on circuit of the camera which is provided with electrical power at all times.
36. The method of clause 35, wherein the signal is provided in response to detecting a condition with a sensor of the camera.
37. The method of clause 35, wherein the signal is provided in response to a condition sensed by a sensor remote from the camera.
38. The method of clause 35, wherein the signal is provided in response to the user activating the application.
39. The method of clause 34, further comprising sending a notification from the camera in response to detecting a condition at the camera; and providing electrical power to the imaging module in response to sending the notification.
40. The method of clause 39, wherein detecting the condition includes detecting motion near the camera.
41. The method of clause 39, wherein the notification is sent by a sub-GHz communication module which is a component of an always on circuit of the camera which is provided with electrical power at all times.
42. The method of clause 34, further comprising providing electrical power to components of an always on circuit of the camera at all times, the always on circuit including a sensor to detect a condition at the camera and a communications module to send a notification regarding a detected condition.

## Claims

1. A method for operating a camera, including:
detecting a condition at the camera using a sensor that is part of the camera;
sending a notification from the camera to a remote device in response to the sensor detecting the condition, sending of the notification occurring while components of a sleep circuit of the camera including an imaging module are inactive and not provided with electrical power; and
sending video image data to a remote server via a first communications network connection using a wifi communications module;
wherein the notification is sent by a sub-GHz communication module which is a component of an always on circuit of the camera which is provided with electrical power at all times.

2. The method of claim 1, further comprising providing electrical power to the imaging module only intermittently and based on a signal provided from a component of an always on circuit of the camera which is provided with electrical power at all times.

3. The method of claim 2, wherein the signal is provided in response to detecting the condition.

4. The method of claim 2, wherein the signal is provided in response to a condition sensed by a sensor remote from the camera.

5. The method of claim 2, wherein the signal is provided in response to a user activating an application via which the user can request image data from the imaging module.

6. The method of claim 1, further comprising providing electrical power to the imaging module in response to sending the notification.

7. The method of claim 1, wherein the step of detecting the condition includes detecting motion near the camera.

8. The method of claim 1, further comprising providing electrical power to components of an always on circuit of the camera at all times, the always on circuit including a sensor to detect the condition and a communications module to send the notification.

9. The method of any preceding claim where the wifi communication module is a component of the sleep circuit and is inactive and not provided with electrical power when the notification is sent.

10. The method according to any preceding claim where the sub-GHz communications module requires less power than the wifi communications module.

11. The method according to any preceding claim comprising sending image date to the base station using the sub-GHz communication module, in a back-up mode in response to a determination that the wifi communications module cannot properly communicate with a server.

12. A method for operating a camera, including:
detecting a condition at the camera using a sensor that is part of the camera;
sending a notification from the camera to a remote device via a communications network connection using a low bandwidth communications module in response to the sensor detecting the condition, sending of the notification occurring while components of a sleep circuit of the camera including an imaging module are inactive and not provided with electrical power; and
sending video image data to a remote server via a further communications network connection using a high bandwidth communications module.

13. The method of claim 12, further comprising providing electrical power to the imaging module only intermittently and based on a signal provided from a component of an always on circuit of the camera which is provided with electrical power at all times.

14. A system comprising one or more processors and one or more computer-readable mediums encoded with instruction which, when executed by the one or more processors, cause the system to perform the method of any of claims 1-13.

15. One or more non-transitory computer-readable mediums encoded with instruction which, when executed by one or more processors of a system, cause the system to perform the method of any of claims 1-13.
